(19) Europäisches Patentamt
European Patent Office
Office européen des brevets

(11) EP 1 400 625 A2

(12) **DEMANDE DE BREVET EUROPEEN**

(43) Date de publication:
**24.03.2004 Bulletin 2004/13**

(21) Numéro de dépôt: **03292059.7**

(22) Date de dépôt: **20.08.2003**

(51) Int Cl.[7]: **D06M 13/513**, D06M 13/517, D06M 16/00, D06M 13/432, A01N 55/00, A01N 47/44, A01N 25/34

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **20.08.2002 FR 0210408**

(71) Demandeur: **Rousseau, Louis
77400 Thorigny (FR)**

(72) Inventeur: **Rousseau, Louis
77400 Thorigny (FR)**

(74) Mandataire: **Le Coupanec, Pascale
Nony & Associés,
3 rue de Penthièvre
75008 Paris (FR)**

(54) **Procédé pour le traitement en surface de substrat(s), naturel(s) ou synthétique(s)**

(57) La présente invention concerne un procédé pour le traitement en surface d'un substrat, naturel ou synthétique et possédant en surface une ou plusieurs fonctions à hydrogène mobile, caractérisé en ce qu'il comprend au moins la mise en présence, au sein d'un milieu liquide, dudit substrat ou de sa surface à traiter avec au moins un composé de formule générale (I) :

$$(X)_{(4-n)}Si(R)_n \qquad (I)$$

dans laquelle :

- X représente une fonction capable de réagir avec au moins une fonction à hydrogène mobile présente sur ledit substrat,
- R représente une chaîne hydrocarbonée en $C_3$ à $C_{30}$, éventuellement interrompue par un hétéroatome choisi parmi l'azote, le soufre et l'oxygène et pouvant être substituée par un groupement réactif, et
- n est un entier variant de 1 à 3,

dans des conditions suffisantes pour obtenir le greffage d'au moins une molécule dudit composé de formule générale (I) en surface dudit substrat, la réticulation des motifs silylés greffés sur ledit substrat et en ce que l'on récupère ledit substrat greffé.

EP 1 400 625 A2

## Description

La présente invention concerne un procédé de traitement notamment de surface d'un substrat portant en surface au moins une fonction à hydrogène mobile en vue de conférer audit substrat de nouvelles propriétés telles qu'une hydrophobicité ou des propriétés bactéricides et/ou fongicides, et/ou de modifier des propriétés déjà existantes. Ce traitement repose plus particulièrement sur le greffage de molécules spécifiques au niveau des fonctions à hydrogène mobile ou dérivées présentes en surface dudit substrat.

Ce substrat peut notamment être de nature minérale, organométallique ou encore être constitué de fibres naturelles.

Classiquement, on distingue deux catégories de fibres naturelles, les fibres cellulosiques et les fibres protéiques.

De par leur composition, les fibres cellulosiques comme le coton, le jute (60-65 % de cellulose), le lin (75 % de cellulose) et le chanvre (85 % de cellulose) sont des polymères particulièrement riches en fonctions hydroxyles et de ce fait sont extrêmement mouillables. Les fibres protéiques comme la laine et la soie sont, pour leur part, des polymères riches en fonctions amino, hydroxyle et/ou thiol présentes sur leurs résidus lysine ($NH_2$), sérine (OH) et cystéine (SH).

L'ensemble de ces fibres est largement employé pour la confection de matériaux notamment dans les domaines du conditionnement et de l'emballage (papiers et cartons d'emballage, emballages en cellulose moulé pour le secteur de l'agro-alimentaire, pharmaceutique et de la haute technologie), l'isolation (ouate de cellulose) et plus généralement du textile technique.

Les textiles techniques sont définis comme des substrats et produits textiles fabriqués en premier lieu pour leurs performances techniques et leurs propriétés fonctionnelles plutôt que pour leurs caractéristiques esthétiques ou décoratives. En l'occurrence, la grande majorité de ces textiles techniques est réalisée dans des polymères et des substrats classiques comme le coton, le jute et la laine.

Les propriétés et la structure des fibres, fils et tissus, impliqués dans la confection des matériaux précités sont souvent considérablement modifiés en vue de leur conférer des propriétés spécifiques de type mécanique, chimique, physico-chimique et/ou biotechnologique.

Plus particulièrement, les fonctionnalités généralement recherchées pour les usages techniques sont la résistance à la traction, l'élasticité, l'uniformité, la résistance chimique, la résistance à haute température, une bonne tenue aux agents chimiques et à l'humidité. Dans le cas du secteur textile relevant de l'habillement ou de l'ameublement, les fonctionnalités recherchées relèvent plutôt du toucher agréable, d'un aspect spécifique, de l'élasticité, de la souplesse, de l'infroissabilité, de l'anti-transpiration, etc. Sont notamment déjà disponibles des textiles possédant des propriétés antiseptiques permanentes, une régulation thermique et/ou une hydrophobicité.

De nombreux procédés ont précisément été développés pour transformer ces fibres en vue de leur conférer de telles fonctions techniques.

Le procédé le plus répandu en matière de textile, consiste à introduire un agent biocide, notamment des zéolithes qui dégagent de l'oxygène actif dans le polymère synthétique correspondant avant l'extrusion de la fibre. Ce procédé assure une grande tenue au lavage, mais limite, dans le même temps et pour la même raison, l'effet actif et exclut bien entendu les fibres naturelles.

Une autre technique consiste à imprégner ou appliquer un apprêt sur la fibre, le filament ou l'étoffe. Dans ce cas, l'action est maximale mais elle s'altère au fil des lavages. En conséquence, ce procédé est plus particulièrement adapté aux tissus à usage unique ou ne nécessitant pas de lavages fréquents, comme dans les secteurs de la literie ou de l'ameublement.

La micro-capsulation est une autre technique proposée pour fonctionnaliser des fibres textiles. Elle consiste à emprisonner une substance active, le plus souvent dans une membrane spiroïdale de diamètre de 10 à 500 µm, pour pouvoir, soit 1a bloquer définitivement, soit la libérer progressivement, en réaction à un effet extérieur tel que action mécanique, chaleur ou encore radiation. Toutefois, ce procédé soulève des problèmes de durabilité lorsqu'il est exposé à des lavages successifs.

Enfin, une technique plus récente propose le greffage par faisceaux d'électrons. Il s'agit d'une réaction radicalaire initiée par un faisceau électronique et qui consiste à introduire un groupement du type ammonium quaternaire dans la fibre et ce par liaison covalente. Solidement accrochés à la fibre, les agents exercent une action permanente même après plusieurs lavages. Toutefois, ce procédé nécessite un investissement extrêmement onéreux.

Pour illustrer cette technique de greffage, on peut en outre citer le procédé décrit dans le brevet FR 2 803 544. Ce procédé, destiné plus particulièrement à fonctionnaliser du bois, met en oeuvre le greffage des fonctions hydroxyles des fibres de cellulose constituant le bois par un composé diréactif de formule X-R-Y dans lequel R figure un espaceur hydrocarboné rigide et, plus particulièrement, un noyau aromatique condensé ou non. Le greffage est réalisé *via* l'établissement de fonctions de type ester carbamique entre l'espaceur et les fibres de cellulose à traiter. Toutefois, ce procédé a pour inconvénient majeur de nécessiter la mise en oeuvre de solvants indésirables sur le plan

industriel, tels que la pyridine et les solvants chlorés. Qui plus est, cette réaction de greffage nécessite de nombreuses heures et des températures élevées fortement préjudiciables en terme de rendement industriel.

La présente invention a précisément pour objet, selon un premier aspect, un procédé de traitement d'un substrat comprenant en surface au moins une fonction à hydrogène mobile, ledit procédé reposant sur le greffage, au niveau de ces fonctions, d'un composé spécifique.

Plus particulièrement, la présente invention a pour objet principal un procédé pour le traitement en surface d'un substrat, naturel ou synthétique et possédant en surface une ou plusieurs fonctions à hydrogène mobile, caractérisé en ce qu'il comprend au moins la mise en présence, au sein d'un milieu liquide, dudit substrat ou de sa surface à traiter avec au moins un composé de formule générale (I):

$$(X)_{(4-n)}-Si-(R)_n \qquad (I)$$

dans laquelle :

- X représente une fonction capable de réagir avec au moins une fonction à hydrogène mobile présente sur ledit substrat,
- R représente une chaîne hydrocarbonée en $C_3$ à $C_{30}$, éventuellement interrompue par un hétéroatome choisi parmi l'azote, le soufre et l'oxygène et pouvant être substituée par un groupement réactif, et
- n est un entier variant de 1 à 3,

dans des conditions suffisantes pour obtenir le greffage d'au moins une molécule dudit composé de formule générale (I) en surface dudit substrat, la réticulation des motifs silylés greffés sur ledit substrat et en ce que l'on récupère ledit substrat greffé.

De manière inattendue, les inventeurs ont mis en évidence que l'utilisation d'un dérivé tel que défini ci-dessus, était particulièrement avantageuse sur le plan industriel pour les raisons suivantes :

Tout d'abord ce composé permet la mise en oeuvre d'un solvant ne soulevant aucun problème de toxicité et donc compatible avec une utilisation industrielle. Il peut s'agir d'un milieu liquide notamment aqueux, hydrocarboné, hydroalcoolique, alcoolique, et/ou à base de solvant(s) hydrocarboné(s), comme par exemple l'hexadécène (substance biodégradable) ou d'au moins un alkyle d'ester à l'image d'un acétate d'alkyle et, plus particulièrement, de l'acétate d'éthyle ou d'isopropyle. L'utilisation d'un solvant hydrocarboné comme par exemple l'hexadécène a notamment pour avantage de permettre l'orientation de la tête polaire-Si $(X)_{(4-n)}$ vers les sites réactifs présents en surface dudit substrat. Par ailleurs, comme il ressort des exemples ci-après, le greffage peut être réalisé rapidement notamment dans un délai inférieur à 1 heure et plus particulièrement à l'échelle de la minute.

Avantageusement, les dérivés silylés considérés selon l'invention sont non ioniques. Ils sont fixés à la surface du substrat par des liaisons covalentes stables. En conséquence, les propriétés, par exemple bactéricides, associées à la présence, en surface du substrat, de dérivés silylés conformes à l'invention ne sont pas obtenues par relargage consécutif de ce dérivé ou du motif de celui-ci porteur de cette propriété. Cette propriété est directement manifestée par la surface du substrat traité.

Au sens de la présente invention, on entend désigner par fonction à hydrogène mobile des fonctions caractérisées par une grande réactivité.

A titre représentatif et non limitatif de ces fonctions, on peut plus particulièrement citer les fonctions hydroxyles, thiols et amines.

D'une manière générale, X peut représenter dans la formule générale (I) toute fonction susceptible de réagir avec au moins l'une de ces fonctions.

En l'occurrence, la fonction présente sur le composé de formule générale (I) peut être une fonction à caractère électrophile.

En particulier, dans la formule générale (I), X peut représenter un atome d'halogène comme l'iode, le chlore, le brome et le fluor et notamment un atome de chlore, un groupement hydroxyle ou un groupement alkoxy en $C_1$ à $C_{10}$ et en particulier en $C_1$ à $C_4$.

L'entier n représente plus particulièrement le chiffre 1.

Quant à R, il peut représenter notamment une chaîne hydrocarbonée linéaire ou ramifiée, saturée ou insaturée en particulier saturée en $C_3$ à $C_{30}$, de préférence en $C_4$ à $C_{25}$ et notamment en $C_7$ à $C_{20}$. Il peut être partiellement ou totalement fluoré.

Le composé de formule générale (I) peut réagir directement avec les fonctions à hydrogène mobile présentes sur ledit substrat, notamment sur les fibres de celui-ci dans le cas d'un substrat à base de fibres naturelles ou *via* une

de leurs forme actives générées *in situ* dans le milieu réactionnel.

En l'occurrence, il peut s'agir de leur forme hydrolysée. L'hydrolyse peut être obtenue à l'aide d'une quantité catalytique d'eau présente dans le milieu réactionnel.

A l'issue du greffage, on procède à une réticulation, généralement thermique, des motifs silylés greffés. On génère ainsi en surface du substrat un réseau siloxane. Plus précisément, consécutivement au greffage, le substrat traité est isolé, lavé de manière à éliminer le composé de formule générale (I) n'ayant pas réagi et séché à une température compatible avec la nature du substrat et suffisante pour provoquer la réticulation des groupements silylés greffés. A titre illustratif, on peut proposer comme température de réticulation convenant à l'invention, celles comprises entre 40 et 150 °C et en particulier entre environ 75 et 130 °C. Cette température est bien entendu ajustée de manière à ne pas affecter les propriétés physicochimiques du substrat ainsi traité.

Avantageusement, cette étape de réticulation permet d'accroître l'efficacité du traitement de surface selon l'invention.

Selon un premier mode de réalisation de l'invention, R figure une chaîne hydrocarbonée saturée dans la formule générale (I). Plus précisément, le composé de formule générale (I) est un dérivé alkyltrihalogénosilane et plus précisément 1' octadécyltrichlorosilane.

Dans le cas particulier d'un composé du type alkyltrichlorosilane, le milieu liquide de réaction contient au moins une quantité catalytique d'eau de manière à déclencher *in situ* l'hydrolyse de celui-ci dans le milieu réactionnel. Le greffage consécutif au niveau du substrat est alors obtenu par élimination d'une molécule d'eau générée par la réaction entre le groupement Si-OH et une fonction protique présente en surface du substrat (OH, $NH_2$, SH,...).

Le substrat est ensuite séché de manière à réaliser la réticulation des motifs silylés.

Selon une seconde variante du procédé, R figure en formule générale (I) une chaîne hydrocarbonée pouvant porter, notamment en extrémité de chaîne, au moins un groupement réactif. Cette variante est tout particulièrement intéressante lorsque l'on souhaite fonctionnaliser ledit substrat et en particulier les fibres de celui-ci dans le cas d'un substrat à base de fibres naturelles avec des molécules susceptibles de lui conférer une nouvelle propriété et/ou de modifier ou améliorer une ou plusieurs propriétés déjà existantes.

Ce groupement réactif peut notamment être choisi parmi les groupements nucléophiles et en particulier peut être représenté par une fonction OH, $NH_2$ ou SH.

Selon un mode de réalisation particulier de cette variante, on fait réagir ledit substrat avec au moins un composé de formule générale (I), dans laquelle R figure une chaîne hydrocarbonée fonctionnalisée en son extrémité par une fonction amine puis, à l'issue du greffage du composé de formule générale (I) et de la réticulation thermique des groupements silylés fixés, on fait réagir ledit substrat avec au moins un composé pourvu d'un groupe susceptible de conférer une nouvelle propriété, de modifier et/ou d'améliorer une propriété déjà manifestée par ledit substrat. Ce composé est alors fixé par établissement d'une liaison covalente avec le dérivé silylé greffé.

En particulier, le groupement réactif présent au niveau de R peut être une fonction nucléophile susceptible de réagir avec une fonction électrophile, portée par une molécule d'intérêt notamment chimique ou biologique, par établissement d'une liaison covalente.

Cette molécule d'intérêt peut notamment être un composé à activité bactéricide et/ou fongicide. Plus particulièrement, ce composé est choisi de manière à générer, par réaction avec le groupement réactif par exemple une fonction amine présente sur le substrat, notamment les fibres de celui-ci dans le cas d'un substrat à base de fibres naturelles, notamment un dérivé connu pour ses propriétés bactéricides et en particulier un motif de type guanidine.

Plus particulièrement, le composé de formule générale (I) est un aminoalkyltrialkoxysilane et notamment, le 3-aminopropyltriméthoxysilane.

En ce qui concerne le composé susceptible de conduire à la génération d'un motif guanidine, il peut être choisi parmi les composés de guanidination classique et notamment les O-méthylisourée, cyanamide, thiopseudourée et pyrazolcarboxamidine. Parmi ces composés, le pyrazolcarboxamidine est tout particulièrement intéressant dans la mesure où il est très réactif et génère en outre lors de la réaction de couplage une molécule de pyrazole qui peut être récupérée et notamment recyclée pour obtenir à nouveau du pyrazolcarboxamidine.

En ce qui concerne le substrat traité, il peut s'agir de tout substrat naturel ou synthétique dans la mesure où celui-ci est pourvu au moins en surface, d'une ou plusieurs fonctions à hydrogène mobile.

Il peut notamment s'agir d'un substrat minéral ou organominéral à l'image par exemple des argiles, des matériaux à base de silicium ou d'aluminium comme les céramiques. Dans ce cas particulier, les fonctions à hydrogène mobile sont figurées par groupements silanol et/ou hydroxy d'aluminium.

Le procédé selon l'invention est également tout particulièrement efficace pour traiter des substrats à base de fibres cellulosiques et/ou de fibres protéiques. Un tel substrat peut être composé en tout ou partie de ces fibres ou d'un de leurs mélanges.

A titre représentatif de ces substrats, on peut plus particulièrement citer le coton, le jute, le lin, le chanvre, la laine, la soie, le cuir et le papier.

Dans le cas particulier du coton, du jute, du lin, du chanvre, les fonctions à hydrogène mobile impliquées

dans la réaction de greffage sont majoritairement des fonctions hydroxyles. Pour ce qui est des substrats de type laine ou soie, ces fonctions peuvent être des fonctions aminés, hydroxyles et/ou thiols.

Le composé de formule générale (I) et le substrat sont mis en présence avec un rapport pondéral ajusté de manière à obtenir la manifestation de la propriété visée pour les fibres traitées.

Généralement, le composé de formule générale (I) peut être mis en oeuvre en solution à une concentration comprise entre environ 0,02 et 0,5 M et plus particulièrement comprise entre environ 0,05 et 0,1 M.

La présente invention a également pour objet, selon un autre de ses aspects, un procédé pour rendre hydrophobe un substrat portant en surface au moins une fonction à hydrogène mobile et notamment un substrat comprenant des fibres naturelles hydrophiles ledit procédé comprenant au moins la mise en présence de ce substrat avec au moins un composé de formule générale (I), tel que défini ci-dessus et plus particulièrement un dérivé alkyltrihydroxysilane, généré ou non *in situ*, dans des conditions suffisantes au greffage d'au moins un motif silylé en surface dudit substrat, et la réticulation consécutive des motifs silylés ainsi fixés.

Elle vise également, selon un autre aspect, un procédé pour conférer des propriétés bactéricides et/ou fongicides à un substrat portant en surface au moins une fonction à hydrogène mobile et notamment un substrat comprenant des fibres naturelles hydrophiles, caractérisé en ce qu'il comprend au moins la mise en présence dudit substrat avec au moins un dérivé aminoalkyltrialkoxysilane dans des condition suffisantes pour permettre le greffage d'au moins un motif aminoalkylsilylé au niveau dudit substrat, la réticulation des motifs silylés greffés et la réaction consécutive des dérivés aminoalkylsilylés fixés avec au moins un réactif de guanidination comme par exemple le pyrazolcarboxamidine pour fonctionnaliser ledit substrat en surface avec des motifs de type guanidine.

Le procédé selon l'invention visant à rendre hydrophobe des substrats à base de fibres naturelles hydrophiles est tout particulièrement intéressant pour préparer des substrats utiles dans les domaines du conditionnement de type papiers d'emballage, cartons d'emballage, emballages en cellulose moulée pour les secteurs de l'agro-alimentaire, pharmaceutique et de la haute technologie, de conservation et préservation de documents papier de type cartes marines et de fabrication de sciures de bois hydrophobes.

En ce qui concerne plus particulièrement le procédé destiné à conférer des propriétés bactéricides et fongicides à des substrats à base de fibres naturelles hydrophiles, il est notamment intéressant pour la préparation de matériaux relevant du domaine de l'hygiène et médical. Il peut notamment être utile pour traiter des produits et substrats destinés à confectionner des produits d'hygiène, tels que les papiers toilette, mouchoirs, coton tiges, serviettes périodiques, couches, compresses, bandages, draps d'hôpitaux, couvertures, housses et vêtements professionnels.

De même, le procédé selon l'invention est également avantageux pour conférer à des matériaux de type tuiles par exemple, des propriétés de surface particulières.

## EXEMPLE 1

Les exemples figurant ci-après sont présentés à titre illustratif et non limitatif du domaine de l'invention.

*Traitement d'un échantillon de jute pour le rendre hydrophobe.*

Un échantillon de jute de 5 cm sur 5 cm est lavé à l'eau savonneuse, rincé abondamment à l'eau puis à l'éthanol pour le débarrasser des impuretés. Après séchage à l'étuve à 80 °C, on l'immerge dans une solution d'octadécyltrichlorosilane (OTS) à 0,05-0,06 mol $L^{-1}$ dans l'hexadécène saturé en eau. Après réaction, on retire l'échantillon, on le lave à l'acétate d'éthyle et le place à 80 °C pendant 30 minutes. Cette opération permet d'assurer la réticulation des groupements silylés entre eux, réticulation qui conduit à une structure du type siloxane. Une étude cinétique de la silanisation d'un substrat montre que le temps de silanisation optimal est de 4 minutes pour une concentration en OTS de 0,06 M. Une mesure de l'angle de contact entre une goutte d'eau et le substrat permet d'apprécier la qualité de l'hydrophobicité du substrat. Selon les expériences, cet angle varie entre 92 et 100° (goniomètre couplé à une caméra). La mesure de l'angle peut être obtenue différemment, en intercalant une goutte macroscopique, déposée sur un substrat solide, entre une source lumineuse et une lentille convergente. On mesure alors directement l'angle de contact en faisant un relevé du contour de la goutte sur un écran placé derrière la lentille.

## EXEMPLE 2

*Traitement de fibres de coton pour leur conférer des propriétés antifongiques et antibactériennes.*

Du 3-aminopropyltrimethoxysilane est mis en solution à une concentration comprise entre 0,05 et 0,5 M dans le méthanol, l'éthanol ou le toluène. 10 g de fibre de cellulose préalablement lavée et séchée sont mis en suspension dans 200 à 300 ml de la solution précédente. L'ensemble est agité à température ambiante pendant trois heures.

On isole la fibre sur verre fritté et on lave à l'éthanol jusqu'à ce que le solvant de lavage donne un test négatif

à la ninhydrine. En effet, ce composé est couramment utilisé pour détecter les aminés et les acides aminés grâce à une réaction de transamination-décarboxylation qui conduit au pourpre de Ruhemann. Expérimentalement, on ajoute une goutte de la solution contenant l'amine à une solution alcoolique de ninhydrine à 1 %. On chauffe 2 à 3 minutes, la solution prend une couleur violette caractéristique de la présence d'une amine primaire.

La fibre est alors réticulée par chauffage à l'étuve à 120 °C pendant 30 minutes.

Un échantillon de la fibre traitée est soumis à un lavage exhaustif au Soxhlet (éthanol) pour le débarrasser du silane physisorbé. Elle donne un test positif à la ninhydrine indiquant que le substrat a bien fixé, par greffage, le dérivé amino silylé.

La fibre aminée est ensuite plongée dans une solution aminée contenant 2 % (en poids) de pyrazolcarboxamidine, HC1 et 2 mol/l de carbonate de sodium. Après trois heures d'incubation, la fibre est retirée de la solution, lavée à l'eau distillée et séchée à l'étuve à 100-110 °C. Un échantillon de la fibre ainsi traitée, après lavage exhaustif à l'eau distillée en Soxhlet donne un test positif au nitrate d'argent indiquant que le chlorhydrate de guanidine est bien greffé sur le substrat.

*Démonstration de l'activité antibactérienne et antifongique de la fibre traitée*

a) Activité bactéricide

Cette activité est appréciée vis-à-vis de deux souches bactériennes spécifiques, une souche E. coli et une souche Staphylococcus epidermis (ATCC 12 228).

100 à 200 mg de la fibre traitée sont placés dans une solution nutritive contenant $10^6$ bactéries/ml. Après incubation de quelques heures, 50 µl de la suspension sont étalés sur boîte de Pétri. Après incubation de 24 heures à 37 °C, on n'observe le développement d'aucune colonie.

b) Activité antifongique

Le traitement d'une suspension de Candida Albicans (ATCC 90028) avec la fibre traitée et sur laquelle on a placé une solution nutritive, montre que le développement du champignon est fortement inhibé.

Toutes ces opérations ont été également menées avec des échantillons témoins, en fibres naturelles préalablement placées dans des solutions nutritives. L'ensemble des microorganismes se sont développés normalement.

## Revendications

1. Procédé pour le traitement en surface d'un substrat, naturel ou synthétique et possédant en surface une ou plusieurs fonctions à hydrogène mobile, **caractérisé en ce qu'**il comprend au moins la mise en présence, au sein d'un milieu liquide, dudit substrat ou de sa surface à traiter avec au moins un composé de formule générale (I):

$$(X)_{(4-n)}Si(R)_n \quad (I)$$

dans laquelle :

- X représente une fonction capable de réagir avec au moins une fonction à hydrogène mobile présente sur ledit substrat,
- R représente une chaîne hydrocarbonée en $C_3$ à $C_{30}$, éventuellement interrompue par un hétéroatome choisi parmi l'azote, le soufre et l'oxygène et pouvant être substituée par un groupement réactif, et
- n est un entier variant de 1 à 3,

dans des conditions suffisantes pour obtenir le greffage d'au moins une molécule dudit composé de formule générale (I) en surface dudit substrat, la réticulation des motifs silylés greffés sur ledit substrat et **en ce que** l'on récupère ledit substrat greffé.

2. Procédé selon la revendication 1, **caractérisé en ce que** l'étape de réticulation est une réticulation thermique réalisée en portant ledit substrat à une température comprise entre environ 40 °C et environ 150 °C.

3. Procédé selon la revendication 1 ou 2, **caractérisé en ce que** la réaction de greffage est réalisée en présence

d'au moins une quantité catalytique d'eau.

**4.** Procédé selon l'une quelconque des revendications 1 à 3, **caractérisé en ce que** la réaction de greffage est réalisée en milieu aqueux, hydrocarboné, hydroalcoolique ou alcoolique.

**5.** Procédé selon l'une quelconque des revendications précédentes, **caractérisé en ce que** le composé de formule générale (I) réagit, soit directement avec les fonctions à hydrogène mobile présentes sur ledit substrat, soit *via* une de ses formes actives générées *in situ* dans le milieu réactionnel.

**6.** Procédé selon l'une quelconque des revendications précédentes, **caractérisé en ce que** le composé de formule générale (I) est hydrolysé *in situ* préalablement à sa réaction avec la ou les fonctions à hydrogène mobile présente (s) sur ledit substrat.

**7.** Procédé selon l'une quelconque des revendications précédentes, **caractérisé en ce que** X représente un atome d'halogène notamment un atome de chlore, un groupement hydroxyle ou un groupement alkoxy en $C_1$ à $C_{10}$ en particulier en $C_1$ à $C_4$.

**8.** Procédé selon l'une quelconque des revendications précédentes, **caractérisé en ce que** n représente l'entier 1.

**9.** Procédé selon l'une quelconque des revendications précédentes, **caractérisé en ce que** R représente une chaîne hydrocarbonée en $C_7$ à $C_{20}$.

**10.** Procédé selon l'une quelconque des revendications précédentes, **caractérisé en ce que** le composé de formule générale (I) est un alkyltrihalogénosilane et notamment l'octadécyltrichlorosilane.

**11.** Procédé selon l'une quelconque des revendications précédentes, **caractérisé en ce que** R représente une chaîne hydrocarbonée portant en outre au moins un groupement réactif susceptible d'être fonctionnalisé.

**12.** Procédé selon la revendication 11, **caractérisé en ce qu'**à l'issue du greffage d'au moins un composé de formule générale (I) à la surface dudit substrat et de la réticulation thermique des groupements silylés greffés, on fait réagir au moins un groupement réactif présent sur la chaîne hydrocarbonée figurée par R avec au moins un composé pourvu d'un groupe susceptible de conférer une nouvelle propriété donnée audit substrat ou de modifier et/ou d'améliorer une propriété déjà présentée par ledit substrat.

**13.** Procédé selon l'une quelconque des revendications 11 ou 12, **caractérisé en ce que** le composé pourvu d'un groupe conférant une propriété donnée audit substrat ou modifiant et ou améliorant une propriété déjà présentée par ledit substrat, est un composé à activité bactéricide et/ou fongicide.

**14.** Procédé selon la revendication 11, 12 ou 13, **caractérisé en ce que** le groupement réactif est une fonction nucléophile susceptible de réagir avec une fonction électrophile portée par une molécule d'intérêt par établissement d'une liaison covalente.

**15.** Procédé selon l'une quelconque des revendications 11 à 14, **caractérisé en ce que** l'on fait réagir ledit substrat greffé avec ledit composé de formule générale (I) porteur d'au moins une fonction amine à titre de groupement réactif avec au moins un composé susceptible de conduire à la formation d'un motif de type guanidine par réaction avec ladite fonction amine.

**16.** Procédé selon la revendication 15, **caractérisé en ce que** le composé est le pyrazolcarboxamidine.

**17.** Procédé selon l'une quelconque des revendications précédentes, **caractérisé en ce que** le substrat est un substrat minéral ou organominéral.

**18.** Procédé selon la revendication 17, **caractérisé en ce que** ledit substrat est de nature argileuse.

**19.** Procédé selon l'une quelconque des revendications 1 à 16, **caractérisé en ce que** le substrat est composé de fibres cellulosiques, et/ou protéiques.

**20.** Procédé selon la revendication 19, **caractérisé en ce que** le substrat est choisi parmi le coton, le jute, le chanvre,

la laine, la soie, le cuir et le papier.

**21.** Procédé pour rendre hydrophobe un substrat, naturel ou synthétique et possédant en surface une ou plusieurs fonctions à hydrogène mobile, **caractérisé en ce qu'**il comprend le traitement en surface dudit substrat avec un procédé tel que défini en revendications 1 à 11.

**22.** Procédé utile pour conférer des propriétés bactéricides et/ou antifongiques à un substrat naturel ou synthétique et possédant en surface une ou plusieurs fonctions à hydrogène mobile, **caractérisé en ce qu'**il comprend le traitement en surface dudit substrat avec au moins un procédé tel que défini en revendications 12 à 16 avec le composé pourvu d'un groupe susceptible de conférer une nouvelle propriété donnée audit substrat ou de modifier et/ou d'améliorer une propriété déjà présentée par ledit substrat étant un réactif de guanidination.

**23.** Procédé selon les revendications 21 ou 22, **caractérisé en ce que** le substrat est tel que défini en revendications 17 à 20.